(19) **Europäisches Patentamt**

**European Patent Office**

**Office européen des brevets**

(11) **EP 0 909 671 B1**

(12) **EUROPÄISCHE PATENTSCHRIFT**

(45) Veröffentlichungstag und Bekanntmachung des Hinweises auf die Patenterteilung:
**23.01.2002 Patentblatt 2002/04**

(51) Int Cl.$^7$: **B60K 17/36**, B60K 17/04, B60K 17/32

(21) Anmeldenummer: **98119539.9**

(22) Anmeldetag: **15.10.1998**

(54) **Antriebsanordnung für eine Tandemachse**

Drive arrangement for tandem axles

Système d'entraînement pour essieux en tandem

(84) Benannte Vertragsstaaten:
**AT DE DK ES FI FR GB SE**

(30) Priorität: **22.01.1998 DE 19802371**
**15.10.1997 DE 19745560**

(43) Veröffentlichungstag der Anmeldung:
**21.04.1999 Patentblatt 1999/16**

(73) Patentinhaber: **Neunkirchener Maschinen- und Achsenfabrik (NAF) GmbH & Co. KG**
**91077 Neunkirchen a. B. (DE)**

(72) Erfinder: **Auer, Ernst, Dipl.-Ing.**
**81245 München (DE)**

(74) Vertreter: **Hofstetter, Alfons J., Dr.rer.nat. et al**
**Hofstetter,Schurack & Skora Balanstrasse 57**
**81541 München (DE)**

(56) Entgegenhaltungen:
**DE-A- 2 522 542          DE-A- 4 120 801**

**Beschreibung**

Die vorliegende Erfindung bezieht sich auf eine Antriebsanordnung für eine Antriebsachse einer selbstfahrenden Arbeitsmaschine. Es handelt sich um eine Tandemachse mit zwei auf beiden Seiten eines Fahrgestells angeordneten zweiarmigen Schwingen. An den Enden dieser Schwingen befinden sich die angetriebenen Räder.

Solche Fahrzeuge oder Arbeitsmaschinen werden beispielsweise als Bau-, Land- oder Forstmaschinen in unwegsamem Gelände eingesetzt. Von einer Kraftmaschine erfolgt die Einleitung des Drehmoments über eine Kardanwelle, ein Differentialgetriebe und ein Planetengetriebe in die Schwingachse der Schwinge. Eine derartige Antriebsanordnung ist aus der DE-AS 25 22 542 bekannt. In dieser bekannten Anordnung erfolgt die Einleitung des Drehmoments in die Schwinge über ein im Fahrzeugrahmen schwingbar gelagertes Achsrohr.

Demgegenüber wird für im unwegsamen Gelände einsetzbare Fahrzeuge bevorzugt, die Schwinge direkt am Fahrzeugrahmen nur um ihre Schwingachse schwingbar anzuordnen. Die Umlenk-, Verteil- und Untersetzungsgetriebe müssen nicht nur für eine gleichmäßige Verteilung des Drehmoments an die antreibenden Räder, sondern auch - und das ist die wesentliche Aufgabe der vorliegenden Erfindung - für eine ständige Bodenhaftung der Räder im unwegsamen Gelände sorgen. Insbesondere dürfen in einem zwischengeschalteten Planetengetriebe die Getrieberäder nicht momentanen Gegenmomenten ausgesetzt werden, die von den Antriebsrädern in schwierigem Gelände erzeugt werden können, ohne sogleich für einen Ausgleich zu sorgen.

Die Lösung dieser Aufgabe besteht gemäß der vorliegenden Erfindung allgemein darin, daß ein zweites Planetengetriebe so eingefügt wird, daß der Zahnkranz des Untersetzungsplanetengetriebes sich am Sonnenrad des zweiten Planetengetriebes abstützt. Der Zahnkranz des zweiten Planetengetriebes ist fest mit der Schwinge und der Steg des zweiten Planetengetriebes ist fest mit dem Fahrgestell verbunden. Dadurch entsteht zwischen dem Fahrgestell und der Schwinge ein "Meß-" und Ausgleichsplanetengetriebe. Das vom Differential an das Hauptplanetengetriebe gelieferte Wellenmoment wird im "Meßgetriebe" übersetzt und gleichzeitig wird dieses Drehmoment durch ein Stützmoment im Zahnkranz, das proportional dem Eingangs- bzw. Abtriebsmoment ist, gemessen. Dieses Stützmoment wird durch das zweite Planetengetriebe in dem im Abstand zur Schwingachse befindlichen Punkt in die Schwinge eingeleitet.

Durch die Wirkung der beiden Drehmomente ergibt sich vorteilhafterweise ein jeweils genügend großes Rückstellmoment, das durch richtige Wahl der Übersetzungsverhältnisse den Forderungen der Praxis angepaßt werden kann.

Es ist zwar aus der DE 41 20 801 C2 bekannt, zwei Planetengetriebe in den Weg zwischen Differential und Schwinge einzubauen. Aber diese zwei Planetengetriebe sind hintereinandergeschaltet. Der Zahnkranz des antriebsseitigen Planetengetriebes stützt sich hierbei am Fahrgestell und der Zahnkranz des radseitigen Planetengetriebes stützt sich hierbei an der Schwinge ab. Auch diese Anordnung erzeugt erforderlichenfalls ein Rückstellmoment. Da hierbei jedoch die Planetenräder beider Getriebe gleichgroß sind, ergeben sich gleiche Übersetzungen, was im direkten Antriebsweg auch sinnvoll ist.

Demgegenüber kann das Übersetzungsverhältnis zwischen Haupt- und "Meß-"getriebe gemäß der vorliegenden Erfindung vorteilhafterweise je nach Anforderung der Praxis unterschiedlich gestaltet sein.

Weitere Einzelheiten, Merkmale und Vorteile ergeben sich aus der nachfolgenden Beschreibung eines zeichnerisch dargestellten Ausführungsbeispiels und eines Zahlenbeispiels im Vergleich zum Stand der Technik.

Die Zeichnung zeigt im Schnitt ein Ausführungsbeispiel der Erfindung. Eine Schwinge 10 ist im Lager 12 gelenkig an einem Fahrgestell 14 angeordnet. Von einem nicht dargestellten Differential erstreckt sich eine Antriebswelle 20, verbunden mit einer Lamellenbremse 30, bis zu einem Sonnenrad 42 eines ersten Meßplanetengetriebes 40. Wie bekannt, ist der Planetenräder 46 tragende Steg 44 dieses Getriebes 40 mit einer Abtriebswelle 60 verbunden, die koaxial zu einer Schwingachse 62 verläuft und in Lagern 64 in der Schwinge 10 gelagert ist. Auf dieser Abtriebswelle 60 sitzt ein Zahnrad 70, das mit weiteren Zahnrädern 72 bekanntermaßen beidseitig in der Schwinge 10 kämmt, um das Drehmoment an die hier nicht eingezeichneten Räder zu übertragen, die an beiden Enden der Schwinge 10 sitzen.

Die Planetenräder 46 rollen auf einem Zahnkranz 48 ab, der mit einem Sonnenrad 52 eines zweiten oder "Dreh-"Planetengetriebes 50 verbunden ist. Auf einem Steg 54 sitzende Planetenräder 56 rollen auf einem Zahnkranz 58 ab, der fest mit der Schwinge 10 verbunden ist. Der Steg 54 ist fest mit dem Fahrgestell 14 verbunden.

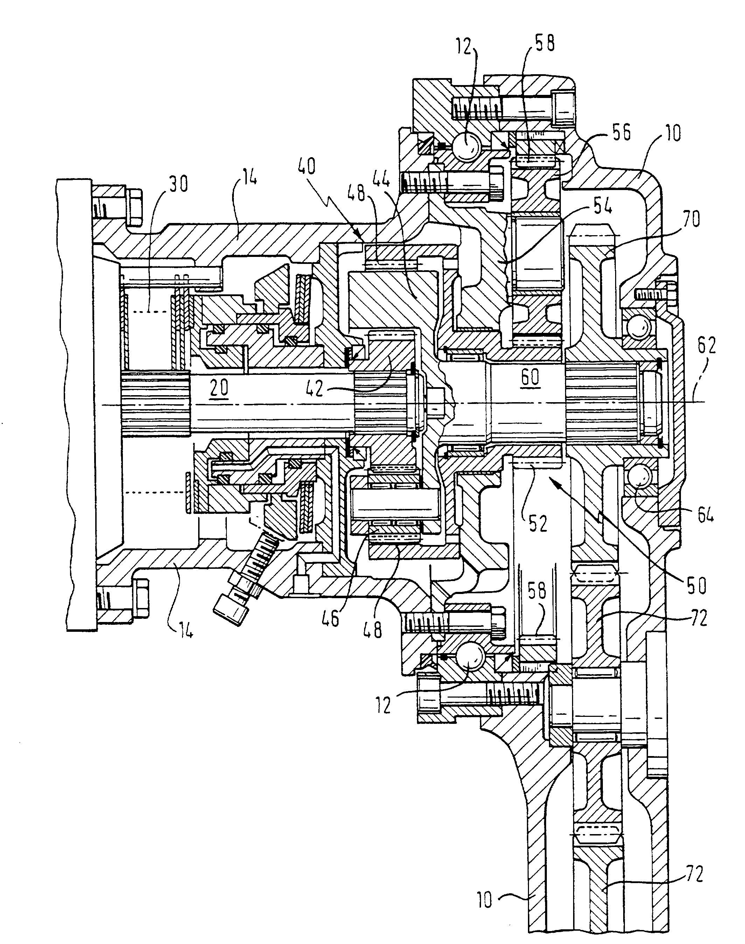

Anzumerken ist, daß sich die Schwinge 10 oberhalb des Zahnrades 70 in der vorliegenden Darstellung ebenfalls zu einem zweiten nicht dargestellten Antriebsrad fortsetzt, wenngleich nicht in der Zeichnungsebene der abgebildeten Darstellung. Die Schwinge 10 braucht nämlich nicht gestreckt ausgebildet zu sein. In der praktischen Verwirklichung bilden die Schwingen oft einen nach unten abgeknickten stumpfen Winkel mit der Achse 62 als Scheitel, wie in Figur 3 der DE 41 20 801 C2 angedeutet.

Im folgenden wird ein Ausführungsbeispiel mit Zahlen belegt. Hierbei wird von einer Achse mit folgenden Annahmen ausgegangen:

| Achse | 16000 kg |
|---|---|
| Reifen-Radius | 570 mm |
| Schwingen-Überhöhung | 200 mm |
| Radstand | 1500 mm |
| Bodenreibwert | 0,8 |
| Übersetzung | 23,294 |

```
Aufteilung der Übersetzungen
```

$$\text{Differential} \qquad 2,067 \qquad \left(\frac{31}{15}\right)$$

$$\text{"Meßplanet" 50} \qquad 3,0 \qquad \left(\frac{70}{35}+1\right)$$

$$\text{"Drehplanet" 40} \qquad 4,0 \qquad \left(\frac{88}{22}\right)$$

$$\text{Schwinge} \qquad 0,7878 \qquad \left(\frac{26}{33}\right)$$

$$\text{Portal} \qquad 1,052 \qquad \left(\frac{20}{19}\right)$$

$$\text{Planeten-Endstand} \qquad 4,53$$

Gesamt:

$$2{,}067 * 3 * 0{,}7878 * 1{,}052 * 4{,}53 = 23{,}28$$

Radmoment bei

$$\mu = 0{,}8; \; r = 0{,}57 \text{ m und 8 t Last} \; (= 80 \text{ kM})$$

$$M_{Rad} = 80000 * 0{,}8 * 0{,}57 = 36480 \text{ Nm}$$

$$\text{Seitenwellen } M_{sw} = \frac{36480}{4{,}53 * 1{,}052 * 0{,}7878 * 3} = 3239 N$$

Stützmoment des Zahnkranzes des

Meßplanet 40    $3239 * (iM_{e1} - 1) = 6478$ *Nm*

= Eingangsmoment im Drehplanet

Abtriebsmoment im Drehplanet 50

$$6478 * 4 = 25912 \text{ Nm}$$

Abtriebsmoment Zentral-Stirnrad 70

$$= 3239 * i_{MA} = 3239 * 3 = 9717 \text{ Nm}$$

Gesamt-Rückstellmoment der Schwinge 10:

$$M_{RS} = 25911 + 9717 = 35628 \text{ Nm}$$

Aufstellmoment infolge Zugkraft:

Zugkraft:    $80000 * 0,8$    $= 64000$

$$M_A = 64000 (0,57 + 0,2) = 49280 \text{ Nm}$$

Differenzmoment :

$$M_D = 49280 - 35628 = 13652 \text{ Nm}$$

Differenz-Radlast :

$$\Delta R = \frac{13652}{1,5} = 9101 \text{ } N$$

Radlast 1:

$$40000 - 9101 = 30899 \text{ N}$$

2:

$$40000 + 9101 = 49101 \text{ N}$$

Verhältnis 2/1:

$$\frac{49101}{30899} = 1,59$$

Vergleich mit einer Schwinge gemäß DE 41 20 801 C2 mit gleichen Ausgangsdaten und Wirkübersetzung 1,82:

$$\text{"Zentralrad"-Moment} = \frac{36480}{1,82} = 20043 \text{ } Nm$$

Aufstellmoment:

$$M_A = 49280 \text{ Nm}$$

Differenzmoment:

$$49280 - 20043 = 29236 \text{ Nm}$$

Differenz-Radlast:

$$\frac{29236}{1,5} = 19490 \text{ } N$$

Radlast 1:

$$40000 - 19490 = 20510 \text{ N}$$

Radlast 2:

$$40000 + 19490 = 59490 \text{ N}$$

Verhältnis 2/1:

$$\frac{59490}{20509} = 2,90$$

Verbesserung:

$$\frac{2,9}{1,58} = 1,83 - 83 \text{ \%}$$

besser oder ausgeglichen

Um den gleichen "Ausgleichsgrad" wie mit einer Lösung gemäß DE 41 20 801 zu haben, müßte eine Wirkübersetzung von 1,376 erzielt werden, d.h. eine BB-Planetentrieb-Übersetzung von 7,57 (statt 5,71). Da bei diesen Übersetzungen das gleiche Drehmoment verarbeitet werden muß wie bei 5,71, wäre ein größerer Bauraum ($\phi$ ca. 30 % größer) erforderlich.

Zum Beispiel

$$\frac{84}{14} + 1 = 7,71$$

oder

$$\frac{90}{14} + 1 = 7,42$$

Durchmesser des Zahnkranzes:

```
90 * 4,5 = 405
                    36 %
66 * 4,5 = 297
```

Dies wiederum bedingt einen größeren Drehkranz, größeren Stützkranz und mehr Höhe an der Schwinge.

Im Vergleich zum Stand der Technik ergeben sich hinsichtlich der Andrückkräfte an den Boden und hinsichtlich der Baumaße gleichgute oder bessere Werte.

**Patentansprüche**

1.  Antriebsanordnung für eine Antriebsachse einer auch im unwegsamen Gelände selbstfahrenden Arbeitsmaschine mit auf beiden Seiten eines Fahrgestells angeordneten zweiarmigen Schwingen (10), an deren äußeren Enden sich angetriebene Räder befinden, wobei das Antriebsmoment in jede Schwinge (10) über ein Planetengetriebe (40) in der Schwingachse der Schwinge eingeleitet wird,
    **dadurch gekennzeichnet,**
    **daß** der Zahnkranz (48) des Planetengetriebes (40) mit dem Sonnenrad (52) eines zweiten Planetengetriebes (50), der Zahnkranz (58) des zweiten Planetengetriebes (50) fest mit der Schwinge (10) und der Steg (54) des zweiten Planetengetriebes (50) fest mit dem Fahrgestell (14) im Abstand zur Schwingachse (62) verbunden ist.

2.  Antriebsanordnung nach Anspruch 1,
    **dadurch gekennzeichnet,**
    **daß** das zweite Planetengetriebe (50) gegenüber dem ersten Planetengetriebe (40) durch unterschiedlich große Planetenräder (46, 56) verschieden übersetzen.

**Claims**

1.  Drive arrangement for a driving axle of a working machine, automotive also in rough terrain, comprising two-armed rockers (10) disposed on both sides of a chassis, at the outer ends of which driven wheels are located, wherein the driving moment is introduced into each rocker (10) via a planetary gearing (40) in the rocking axis of the rocker,
    **characterized in that**
    the toothed rim (48) of the planetary gearing (40) is connected to the sun gear (52) of a second planetary gearing (50), the toothed rim (58) of the second planetary gearing (50) is fixedly connected to the rocker (10), and the stem (54) of the second planetary gearing (50) is fixedly connected to the chassis (14) spaced apart from the rocking axis (62).

2.  Drive arrangement according to claim 1,
    **characterized in that**
    the second planetary gearing (50) gears differently from the first planetary gearing (40) by differently sized planetary gears (46, 56).

**Revendications**

1.  Système d'entraînement pour un essieu de commande d'une machine de travail automotrice également sur du terrain peu praticable, comprenant des ailes (10) à deux bras disposées bilatéralement au châssis, aux extrémités extérieures desquelles se trouvent des roues entraînées, le couple d'entraînement étant introduit dans chaque aile (10) à travers un engrenage planétaire (40) dans l'axe d'oscillation de l'aile,
    **caractérisé en ce que**
    la couronne dentée (48) de l'engrenage planétaire (40) est solidaire à la roue solaire (52) d'un deuxième engrenage planétaire (50), la roue dentée (58) du deuxième engrenage planétaire (50) est solidaire à l'aile (10), et l'entretoise (54) du deuxième engrenage planétaire (50) est solidaire au châssis (14) à une distance de l'aile (62).

2.  Système d'entraînement selon la revendication 1,
    **caractérisé en ce que**
    le deuxième engrenage planétaire (50) s'engrène différemment par rapport au premier engrenage planétaire (40) en raison des roues planétaires (46, 56) de taille différente.